# EUROPÄISCHE PATENTSCHRIFT

(11) **EP 2 273 134 B1**
(45) Veröffentlichungstag und Bekanntmachung des Hinweises auf die Patenterteilung: **23.03.2016**
(21) Anmeldenummer: 10168452.0
(22) Anmeldetag: 05.07.2010
(51) Int. Cl.: F16B 1/00, F16B 25/00

(54) **Gewindefurchende Schraube**
Thread tapping screw
Vis autotaraudeuse

(30) Priorität: 09.07.2009 DE 102009027582
(43) Veröffentlichungstag der Anmeldung: 12.01.2011
(73) Patentinhaber: HILTI Aktiengesellschaft, 9494 Schaan (LI)
(72) Erfinder: Freerksen, Isaiah, 9470, Buchs (CH); Zitzmann, Ralf, 6800, Feldkirch (AT); Rosenkranz, Falk, 9658, Wildhaus (CH); Achleitner, Corinna, 6700, Bludenz (AT)
(74) Vertreter: Hilti Aktiengesellschaft Corporate Intellectual Property

(56) Entgegenhaltungen:
- EP-A1- 1 862 677
- EP-A2- 1 340 958
- DE-A1- 10 108 867
- JP-A- 2008 175 314

## Beschreibung

Die Erfindung betrifft eine gewindefurchende Schraube, der im Oberbegriff des Patentanspruchs 1 genannten Art.

Eine derartige gewindefurchende Schraube wird in ein vorgebohrtes Bohrloch in den Untergrund mittels eines geeigneten Werkzeugs, wie z. B. eines Schraubers, Bohrhammers, Schraubenschlüssels oder dergleichen eingedreht, wobei der Gewindeanfang der Schraube ein dem Gewinde entsprechendes Gegengewinde in den Untergrund furcht. In das Gegengewinde greift das nachfolgende Gewinde der Schraube ein, womit bei Belastung der Schraube die Last in den Untergrund übertragen wird. In einen weichen Untergrund, wie z. B. Porenbeton oder Gipskarton, können gewindefurchende Schrauben auch direkt ohne Vorbohren eines Bohrlochs in den weichen Untergrund eingeschraubt werden.

Ein wesentlicher Vorteil von gewindefurchenden Schrauben ist die Möglichkeit, diese wieder aus dem Untergrund herauszuschrauben, ohne dass Teile der geschaffenen Befestigung im Untergrund verbleiben. Gewindefurchende Betonschrauben, die in mineralische Untergründe gesetzt werden, werden in der Praxis von Anwendern auch für temporäre Befestigungen beispielsweise beim Schalungsbau, beim Gerüstbau oder beim Festlegen von Bohr- und Schneidwerkzeugen in der Diamant-Bohr- und Trenntechnik verwendet. Die gewindefurchenden Schrauben sind somit nicht nur demontierbar, sondern prinzipiell auch erneut wiederverwendbar.

Aus der EP 1 862 677 A1 ist eine gewindefurchende Schraube mit einem Schaft, der ein erstes Ende und ein gegenüberliegendes zweites Ende mit einem Lastangriffsmittel aufweist, und mit einem Gewinde bekannt, das sich zumindest bereichsweise über die Länge des Schafts erstreckt, wobei zumindest ein Verschleissindikatormittel an dem Gewinde vorgesehen ist.

Das zumindest eine Verschleissindikatormittel der bekannten Schraube zeigt den Abnutzungsgrad des Gewindes an und erlaubt dadurch eine Aussage über die Lastbeziehungsweise Trageigenschaften einer demontierten gewindefurchenden Schraube und über deren erneuten Wiederverwendbarkeit.

Bei der Herstellung der Schraube wie auch bei deren Verwendung können Teile des Gewindes herausbrechen, welche seitens des Anwenders versehentlich als Verschleissindikatormittel interpretiert werden könnten. Dies könnte zu einer Fehleinschätzung in Bezug auf eine erneute Verwendbarkeit der Schraube führen.

Aufgabe der Erfindung ist es, eine selbstfurchende Schraube, insbesondere Betonschraube, zu schaffen, die mehrmals verwendbar und bei der eine einfache Beurteilung der Verwendbarkeit gegeben ist.

Die Aufgabe ist durch die Merkmale des unabhängigen Anspruchs gelöst. Vorteilhafte Weiterbildungen sind in den Unteransprüchen dargelegt.

Gemäss der Erfindung ist an der Schraube an der Aussenseite des Schafts zumindest ein Identifikationsmittel zur Identifizierung des Verschleissindikatormittels vorgesehen.

Durch das zumindest eine Identifikationsmittel ist eine eindeutige Identifizierung des zumindest einen Verschleissindikatormittels gewährleistet. Etwaige ungewünschte Ausbrüche im Gewinde oder Beschädigungen des Gewindes sind aufgrund der an der Schraube vorgesehenen Identifikationsmittel nicht mehr versehentlich als Verschleissindikatormittel interpretierbar. Damit wird auch bei einer mehrmaligen Verwendung der Verschleissindikatormittel aufweisenden, gewindefurchenden Schraube eine sichere Einschätzung durch einen Anwender in Bezug auf deren erneute Verwendbarkeit gewährleistet.

Grundsätzlich könnte das zumindest eine Identifikationsmittel an einer Gewindeflanke des Gewindes und vorteilhaft direkt benachbart zu dem von diesem zu identifizierenden Verschleissindikatormittel vorgesehen sein. Das zumindest eine Identifikationsmittel könnte dann direkt bei der Ausformung des Gewindes an diesem ausgebildet werden.

Erfindungsgemäss ist das zumindest eine Identifikationsmittel jedoch an einer Aussenseite des Schafts vorgesehen, vorteilhaft direkt benachbart zu dem von diesem zu identifizierenden Verschleissindikatormittel. Vorteilhaft wird das zumindest eine Identifikationsmittel direkt bei der Ausformung des Schafts an diesem ausgebildet.

An einer gewindefurchenden Schraube können mehrere Identifikationsmittel vorgesehen sein, welche jeweils an den Gewindeflanken des Gewindes und/oder an der Aussenseite des Schafts angeordnet sind.

Vorzugsweise ist das zumindest eine Identifikationsmittel eine an der Schraube vorgesehene Vertiefung, welche sich einfach bei der Herstellung der gewindefurchenden Schraube z. B. in einem Walzverfahren an dieser ausbilden lässt.

Bevorzugt ist das zumindest eine Identifikationsmittel eine an der Schraube vorgesehene Erhöhung, welche sich einfach bei der Herstellung der gewindefurchenden Schraube z. B. in einem Walzverfahren an dieser ausbilden lässt.

An einer gewindefurchenden Schraube können mehrere Identifikationsmittel vorgesehen sein, welche als Vertiefungen und/oder als Erhöhungen ausgebildet sind. Weiter kann das zumindest eine Identifikationsmittel auch eine Profilierung sein, welche nur Vertiefungen, nur Erhebungen oder Vertiefungen und Erhebungen aufweist.

Vorzugsweise sind zumindest zwei Identifikationsmittel zur Identifizierung eines Verschleissindikatormittels vorgesehen, welche eine einfache und exakte Identifizierung des Verschleissindikatormittels ermöglichen.

Bevorzugt weist das zumindest eine Identifikationsmittel im Grundriss eine mehreckige Ausgestaltung auf, womit das zumindest eine Identifikationsmittel eine zur Identifizierung des entsprechenden Verschleissindikatormittels vorteilhafte Ausgestaltung aufweist. Vorteilhaft weist eine Ecke des zumindest einen Identifikationsmittel in Richtung des zu identifizierenden Verschleissindikatormittels, womit die Identifizierbarkeit des zu identifizierenden Verschleissindikatormittels noch weiter verbessert wird. Das Identifikationsmittel weist im Grundriss besonders vorteilhaft eine dreieckige Ausgestaltung auf.

In einer alternativen Ausführungsform weist das zumindest eine Identifikationsmittel im Grundriss eine runde Ausgestaltung auf, womit das zumindest eine Identifikationsmittel einfach ausgebildet werden kann. Neben einer kreisrunden Ausgestaltung kann das zumindest eine Identifikationsmittel auch eine ovale oder eine Ausgestaltung mit mehr als zwei Wendepunkten aufweisen.

Die Erfindung wird nachstehend anhand von Ausführungsbeispielen näher erläutert. Es zeigen:
- Fig. 1: Eine Seitenansicht auf ein erstes Ausführungsbeispiel einer erfindungsgemässen Schraube;
- Fig. 2: eine Seitenansicht auf ein zweites Ausführungsbeispiel einer erfindungsgemässen Schraube; und
- Fig. 3: einen schematischen Teilschnitt durch eine Gewindeflanke eines dritten Ausführungsbeispiels einer Schraube.

Grundsätzlich sind in den Figuren gleiche Teile mit den gleichen Bezugszeichen versehen.

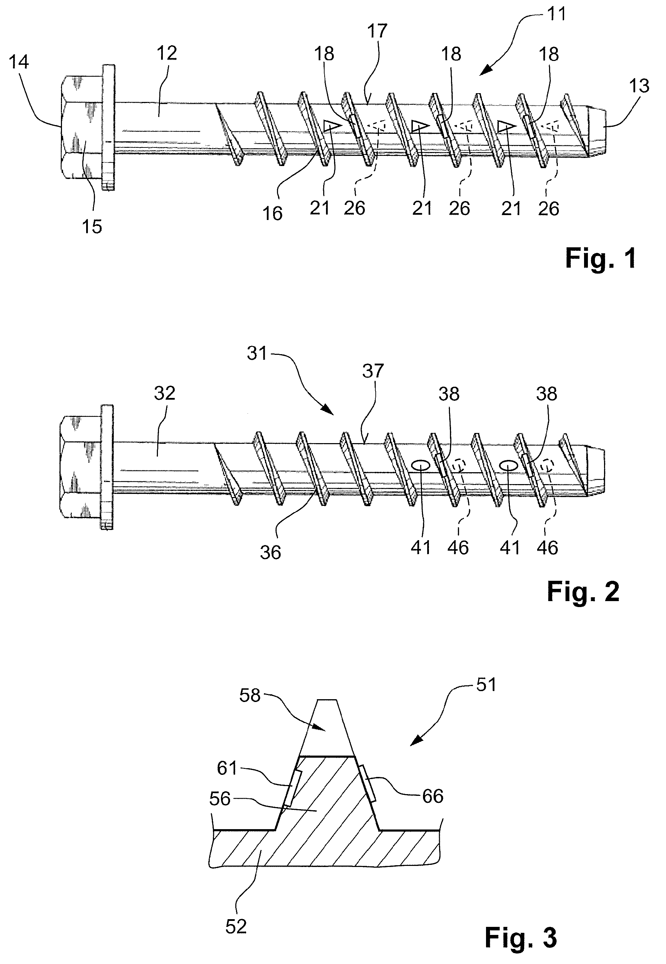

In der Figur 1 ist eine gewindefurchende Schraube 11 mit einem Schaft 12, der ein erstes Ende 13 und ein gegenüberliegendes zweites Ende 14 mit einem Lastangriffsmittel 15 in Form eines Sechskantkopfes aufweist, und mit einem Gewinde 16 gezeigt, das sich bereichsweise über die Länge des Schafts 12 erstreckt. An dem Gewinde 16 sind mehrere Verschleissindikatormittel 18 vorgesehen, welche als Ausnehmungen 22 ausgebildet sind, die sich von dem Aussenrand des Gewindes 16 in Richtung des Gewindegrundes beziehungsweise der Aussenseite 17 des Schafts 12 erstrecken. Sind die Bereiche des Gewindes 16 neben einem der Verschleissindikatormittel 18 beispielsweise durch die Abnutzung beim Eindrehen der gewindefurchenden Schraube 11 z. B. in mineralischen Untergründen abgetragen, ist das Verschleissindikatormittel 18 als solches nicht mehr erkennbar. Dem Anwender wird dadurch optisch signalisiert, dass die untere Tragfähigkeitsgrenze der gewindefurchenden Schraube 11 unterschritten ist und diese zumindest für bestimmte Befestigungen nicht mehr wieder verwendbar ist.

Zur eindeutigen Identifizierung der Verschleissindikatormittel 18 ist jedem der Verschleissindikatormittel 18 ein Identifikationsmittel 21 zugeordnet, das an der Aussenseite 19 des Schafts 12 vorgesehen ist. Die Identifikationsmittel 21 weisen im Grundriss eine mehreckige, hier dreieckige Ausgestaltung auf. Eine Ecke des Identifikationsmittels 21 weist für eine einfache Identifizierung des Verschleissindikatormittels 18 zu diesem hin. Jedes Identifikationsmittel 21 ist auf der dem Lastangriffsmittel 15 zugewandten Seite in Bezug auf das entsprechende Verschleissindikatormittel 18 und somit zumindest teilweise vor einer vollständigen Beschädigung während des Einschraubvorgangs der gewindefurchenden Schraube 11 geschützt.

Optional und deshalb hier nur gestrichelt dargestellt, ist bei der gewindefurchenden Schraube 11 bei jedem Verschleissindikatormittel 18 ein weiteres Identifikationsmittel 26 vorgesehen. In einer derartigen Ausführungsform wäre jedes Verschleissindikatormittel 18 durch zwei beidseitig des Gewindeganges des Gewindes 16 angeordnete Identifikationsmittel 21 und 26 identifiziert. Das weitere Identifikationsmittel 26 weist in diesem Beispiel im Grundriss ebenfalls eine dreieckige Ausgestaltung und jeweils eine zum Verschleissindikatormittel 18 hinweisende Ecke auf. Die Identifikationsmittel 21 und 26 können Vertiefung und/oder Erhebung sein.

Die in der Figur 2 gezeigte gewindefurchende Schraube 31 ist zur Identifizierung der Verschleissindikatormittel 38 mit an der Aussenseite 37 des Schafts 32 angeordneten Identifikationsmittein 41 versehen, die im Grundriss eine runde, hier ovale, Ausgestaltung aufweisen.

Optional und deshalb nur gestrichelt dargestellt ist bei der gewindefurchenden Schraube 31 bei jedem Verschleissindikatormittel 38 ein weiteres Identifikationsmittel 46 vorgesehen. In einer derartigen Ausführungsform wäre jedes Verschleissindikatormittel 38 durch zwei beidseitig des Gewindeganges des Gewindes 36 angeordnete Identifikationsmittel 41 und 46 identifiziert. Das weitere Identifikationsmittel 46 weist in diesem Beispiel im Grundriss eine runde, hier kreisrunde Ausgestaltung auf. Die Identifikationsmittel 41 und 46 können eine Vertiefung und/oder eine Erhebung sein.

Bei der hier nur ausschnittsweise dargestellten gewindefurchenden Schraube 51 weist zur Identifizierung des Verschleissindikatormittels 58 diese an beiden Gewindeflanken des Gewindes 56 je ein Identifikationsmittel 61 und 66 auf. Das Identifikationsmittel 61 ist in diesem Ausführungsbeispiel eine Vertiefung und kann im Grundriss eine mehreckige oder runde Ausgestaltung aufweisen. Das Identifikationsmittel 66 ist in diesem Ausführungsbeispiel eine Erhöhung und kann im Grundriss ebenfalls eine mehreckige oder runde Ausgestaltung aufweisen.

An einer gewindefurchenden Schraube können mehrere, unterschiedliche ausgebildete Identifikationsmittel zur Identifizierung der Verschleissindikatormittel vorgesehen sein.

Die Verschleissindikatormittel 18, 38 und 58 sind in den gezeigten Ausführungsformen jeweils als Ausnehmungen dargestellt. Die Verschleissindikatormittel können auch eine andere Ausgestaltung aufweisen, wie sie z. B. in der EP 1 862 677 A1 beschrieben sind. Des Weiteren können an einer gewindefurchenden Schraube mehrere, unterschiedlich ausgebildete Verschleissindikatormittel vorgesehen sein.

## Patentansprüche

1. Gewindefurchende Schraube mit einem Schaft (12; 32; 52), der ein erstes Ende (13) und ein gegenüberliegendes zweites Ende (14) mit einem Lastangriffsmittel (15) aufweist, und mit einem Gewinde (16; 36; 56), das sich zumindest bereichsweise über die Länge des Schafts (12; 32; 52) erstreckt, wobei zumindest ein Verschleissindikatormittel (18; 38; 58) an dem Gewinde (16; 36; 56) vorgesehen ist, **dadurch gekennzeichnet, dass** an der Schraube (11; 31) an der Aussenseite (17; 37) des Schafts (12; 32) zumindest ein Identifikationsmittel (21, 26; 41, 46) zur Identifizierung des zumindest einen Verschleissindikatormittels (18; 38) vorgesehen ist.

2. Schraube nach Anspruch 1, **dadurch gekennzeichnet, dass** das zumindest eine Identifikationsmittel (21, 26; 41, 46) eine an der Schraube (11; 31) vorgesehene Vertiefung ist.

3. Schraube nach Anspruch 1, **dadurch gekennzeichnet, dass** das zumindest eine Identifikationsmittel (21, 26; 41, 46) eine an der Schraube (11; 31) vorgesehene Erhöhung ist.

4. Schraube nach einem der Ansprüche 1 bis 3, **dadurch gekennzeichnet, dass** zumindest zwei Identifikationsmittel (21, 26; 41, 46) zur Identifizierung eines Verschleissindikatormittels (18; 38) vorgesehen sind.

5. Schraube nach einem der Ansprüche 1 bis 4, **dadurch gekennzeichnet, dass** das zumindest eine Identifikationsmittel (21, 26) im Grundriss eine mehreckige Ausgestaltung aufweist.

6. Schraube nach einem der Ansprüche 1 bis 4, **dadurch gekennzeichnet, dass** das zumindest eine Identifikationsmittel (41, 46) im Grundriss eine runde Ausgestaltung aufweist.

## Claims

1. Thread-forming screw comprising a shank (12; 32; 52) having a first end (13) and an opposing second end (14) with a load-application means (15) and comprising a thread (16; 36; 56) extending at least in some areas over the length of the shank (12; 32; 52), at least one wear-indicator means (18; 38; 58) being provided on the thread (16; 36; 56), **characterised in that** at least one identification means (21, 26; 41, 46) for identifying the at least one wear-indicator means (18; 38) is provided on the screw (11; 31) on the outer face (17; 37) of the shank (12; 32).

2. Screw according to claim 1, **characterised in that** the at least one identification means (21, 26; 41, 46) is a recess provided on the screw (11; 31).

3. Screw according to claim 1, **characterised in that** the at least one identification means (21, 26; 41, 46) is a protuberance provided on the screw (11; 31).

4. Screw according to one of claims 1 to 3, **characterised in that** at least two identification means (21, 26; 41, 46) are provided for identifying a wear-indicator means (18; 38).

5. Screw according to one of claims 1 to 4, **characterised in that** the at least one identification means (21, 26) has a polygonal design in plan view.

6. Screw according to one of claims 1 to 4, **characterised in that** the at least one identification means (41, 46) has a round design in plan view.

## Revendications

1. Vis autotaraudeuse ayant une tige (12 ; 32 ; 52) comportant une première extrémité (13) et une seconde extrémité opposée (14) avec des moyens d'application de charge (15), et un filetage (16 ; 36 ; 56) s'étendant au moins dans certaines zones sur la longueur de la tige (12 ; 32 ; 52), dans laquelle au moins un moyen d'indication d'usure (18 ; 38 ; 38) est prévu sur le filetage (16 ; 36 ; 56), **caractérisée en ce qu'**au moins un moyen d'identification (21, 26 ; 41, 46) est prévu sur la vis (11 ; 31), sur le côté extérieur (17 ; 37) de la tige (12 ; 32), afin d'identifier le au moins un moyen d'identification d'usure (18 ; 38).

2. Vis selon la revendication 1, **caractérisée en ce que** ledit au moins un moyen d'identification (21, 26 ; 41, 46) est une cavité prévue sur la vis (11 ; 31).

3. Vis selon la revendication 1, **caractérisée en ce que** ledit au moins un moyen d'identification (21, 26 ; 41, 46) est une élévation prévue sur la vis (11 ; 31).

4. Vis selon l'une des revendications 1 à 3, **caractérisée en ce qu'**au moins deux moyens d'identification (21, 26 ; 41, 46) sont prévus pour identifier un moyen d'indication d'usure (18 ; 38).

5. Vis selon l'une des revendications 1 à 4, **caractérisée en ce que** ledit au moins un moyen d'identification (21, 26) a un contour polygonal en vue de dessus.

6. Vis selon l'une des revendications 1 à 4, **caractérisée en ce que** ledit au moins un moyen d'identification (41, 46) a un contour rond en vue de dessus.
